# EUROPEAN PATENT APPLICATION

(11) **EP 3 285 022 A1**
(43) Date of publication of application: **21.02.2018**
(21) Application number: 17185011.8
(22) Date of filing: 04.08.2017
(51) Int. Cl.: F24S 50/00, F24S 40/00

(54) **SOLAR PANEL ASSEMBLY, METHOD FOR MODIFYING THE CONNECTION MODE BETWEEN AT LEAST ONE FIRST SOLAR PANEL AND ONE SECOND SOLAR PANEL OF A SOLAR PANEL ASSEMBLY, AND KIT FOR INSTALLING SOLAR PANEL ASSEMBLIES**

(30) Priority: 05.08.2016 IT 201600083148
(71) Applicant: Riello S.p.A., 37045 Legnago (IT)
(72) Inventor: CASIRAGHI, Stefano, 23875 Osnago (IT); PERER, Umberto, 31030 Arcade (IT)
(74) Representative: Andreotti, Erika

(57) **Abstract**

A solar panel assembly is provided with a first solar panel (2, 3; 21a, 21b, 21c; 31a, 31b, 31c, 31d, 31e, 31f, 31g; 41a, 41b, 41c) comprising two first headers (6) and a plurality of first pipes (7) arranged parallel and connected, at the ends, to the first headers (6); at least one second solar panel (3, 2; 21b, 21c, 21a; 31b, 31c, 31d, 31e, 31f, 31g, 31a; 41b, 41c, 41a), comprising two second headers (10) and a plurality of second pipes (11) arranged parallel and connected, at the ends, to the second headers (10); and at least one connection element (4; 22a, 22b, 22c, 22d; 42a, 42b) configured so as to connect a first header (6) and a second header (10) and to regulate the passage of fluid between said first header (6) and said second header (10).

## Description

The present invention relates to a solar panel assembly, a method for modifying the connection mode between at least one first solar panel and a second solar panel of a solar panel assembly, and a kit for installing solar panel assemblies.

Solar panel assemblies of known type normally comprise at least one first solar panel provided with two first headers and at least one second solar panel provided with two second headers.

The first and second headers are either connected together in a first mode so as to establish a serial connection between the panels or are connected together in a second mode to establish a parallel connection between the panels.

When the panels are connected in parallel, the pressure losses within the panel assembly are reduced with respect to those that occur when the panels are connected in series. It is thus possible to use less powerful pumps and reduce the consumption of the solar system. In the parallel connection mode, however, the output temperature from the solar panel assembly is lower than that obtainable with the solar panels connected in series.

The choice of connection mode is therefore usually made a priori according to requirements.

However, prior to installation it is not always possible to predict what the optimal connection mode between the panels of the solar panel assembly to be installed will be.

External conditions or particular configurations of the roof may indeed necessarily oblige a change to the configuration that had been planned in the design phase.

The panel connection systems currently available do not ensure this type of flexibility during installation. With connection systems of known type, it is not possible to adapt the system quickly, easily and inexpensively to new requirements.

It is therefore an object of the present invention to provide a solar panel assembly provided with a flexible connection system which facilitates easy adaptability to the context of the installation conditions and which, at the same time, ensures proper and reliable operation.

In particular, it is an object of the present invention to provide a solar panel assembly wherein the connection between the solar panels is sufficiently flexible to allow a quick change of connection mode from series to parallel and vice versa.

In accordance with these objects the present invention relates to a solar panel assembly in accordance with what is claimed in claim 1.

It is a further object of the present invention to provide a quick, easy and effective method of changing the connection mode between at least one first solar panel and at least one second solar panel of a solar panel assembly.

In accordance with these objects, the present invention relates to a method for modifying the connection mode between at least one first solar panel and at least one second solar panel of a solar panel assembly as claimed in claim 10.

Finally, it is an object of the present invention to provide a kit for installing solar panel assemblies which facilitates an installation which is flexible and adaptable to the requirements of the context.

In accordance with these objects, the present invention relates to a solar panel assembly in accordance with what is claimed in claim 15.

Further characteristics and advantages of the present invention will become apparent from the following description of a non-limiting example of an embodiment, with reference to the figures of the accompanying drawings, wherein:
- Figure 1 is a schematic diagram of a solar panel assembly according to the present invention in a first operating configuration.
- Figure 2 is schematic diagram of a detail of the detail of Figure 1;
- Figure 3 is a schematic diagram of the solar panel assembly of Figure 1 in a second operating configuration.
- Figure 4 is a schematic diagram of a solar panel assembly according to a second embodiment of the present invention in a first operating configuration.
- Figure 5 is a schematic diagram of the solar panel assembly of Figure 4 in a second operating configuration.
- Figure 6 is a schematic diagram of the solar panel assembly of Figure 4 in a third operating configuration.
- Figure 7 is a schematic diagram of a solar panel assembly according to a third embodiment of the present invention.
- Figure 8 is a schematic diagram of a solar panel assembly according to a fourth embodiment of the present invention in a first operating configuration.
- Figure 9 is a schematic diagram of the solar panel assembly of Figure 8 in a second operating configuration.

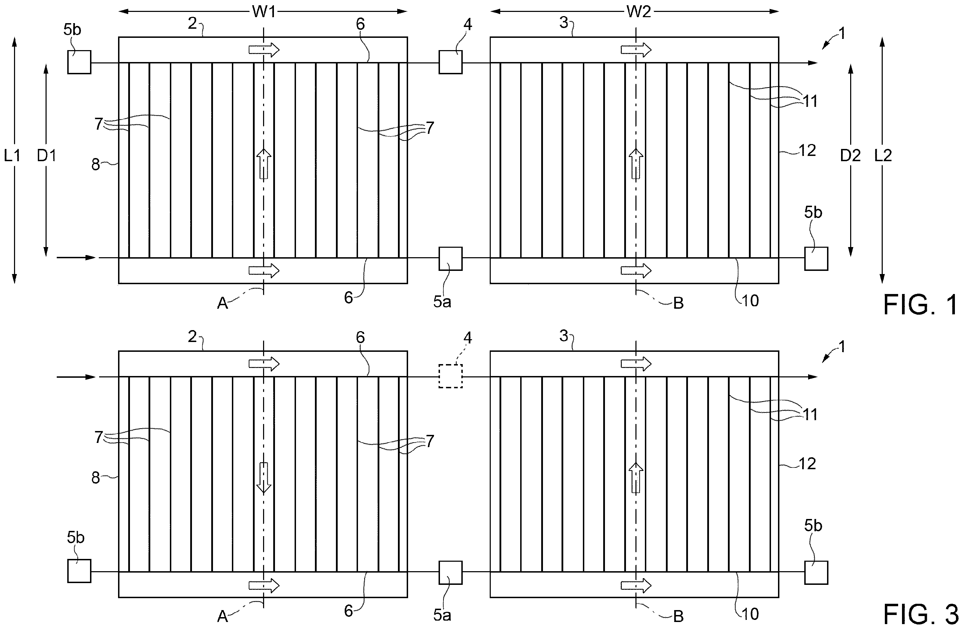

In Figure 1, a solar panel assembly according to the present invention is indicated with the reference number 1.

The assembly 1 is connected to a heating system and/or a domestic hot water supply system (for simplicity, not shown in the attached Figures). The system, as will be seen below, is provided with at least one pump configured to deliver heating fluid to the solar panels of the solar panel assembly 1.

The solar panel assembly 1 comprises at least one first solar panel 2, at least one second solar panel 3, at least one connection element 4, at least one connector 5a and at least two end caps 5b.

The first solar panel 2 extends along a longitudinal axis A and has a width W1 (understood as the size of the panel 2 orthogonal to the axis A and a length L1 (understood as the size of the panel 2 in a direction parallel to the axis A).

In the non-limiting example described and illustrated here, the solar panels are smaller in width than in length. Solar panels of this type are normally known in the field as "vertical structure" panels. A variant of the solar panel assemblies according to the present invention not shown provides that the solar panels of the assembly have a "horizontal structure", i.e. are smaller in length than in width.

In particular, the first solar panel 2 comprises two first headers 6 and a plurality of first pipes 7 arranged in parallel and connected, at their ends, to the first headers 6, an absorber element (not shown in the attached Figures) thermally coupled to the first pipes 7 and a casing 8.

The first headers 6 are substantially parallel and arranged at a distance D1 from each another.

The first pipes 7 are preferably orthogonal to the first headers 6.

The first headers 6, the first pipes 7 and the absorber element are at least partly housed inside the casing 8.

The second solar panel 3 extends along a longitudinal axis B and has a width W2 (understood as the size of the panel 3 orthogonal to the axis B and a length L2 (understood as the size of the panel 3 in a direction parallel to the axis B).

In particular, the second solar panel 3 comprises two second headers 10 and a plurality of second pipes 11 arranged in parallel and connected, at their ends, to the second headers 10, an absorber element (not shown in the attached Figures) thermally coupled to the second pipes 11 and a casing 12.

The second headers 10 are substantially parallel and arranged at a distance D2 from each another.

The second pipes 11 are preferably orthogonal to the second headers 10.

The second headers 10, the second pipes 11 and the absorber element are at least partly housed inside the casing 12.

The distance D2 is substantially identical to the distance D1. This makes it possible to couple the first headers 6 to the second headers 10 even if the solar panel 2 differs from the solar panel 3 in the size of one or both of its width and length. This makes it possible for the installer to couple a plurality of solar panels differing in at least one dimension according to a configuration that optimises the use of the available surface.

The connection element 4 is configured so as to connect a first header 6 and a second header 10 and so as to regulate passage of fluid between the said first header 6 and the said second header 10 as discussed in detail below.

The connector 5a is configured so as to connect the remaining first header 6 with the remaining second header 10.

The connector 5a preferably comprises a male element and a female element coupled together (not shown in the attached figures) and can be coupled to the first header 6 or the second header 10.

In essence, the connector 5a connects the first header 6 with the second header 10 without interfering with the passage of fluid, while the connection element 4, in addition to connecting the first header 6 with the second header 10, performs the function of regulating the passage of fluid.

The end caps 5b are configured to seal off the end of the header 6 to which they are coupled so as to define a desired route for the fluid.

Changing the position of the end caps 5b, the connectors 5a, and the connection element 4 makes it possible to modify the path of the fluid.

A variant not illustrated provides that the assembly 1 is not provided with connectors, but only with connection elements for connecting the headers of the solar panels.

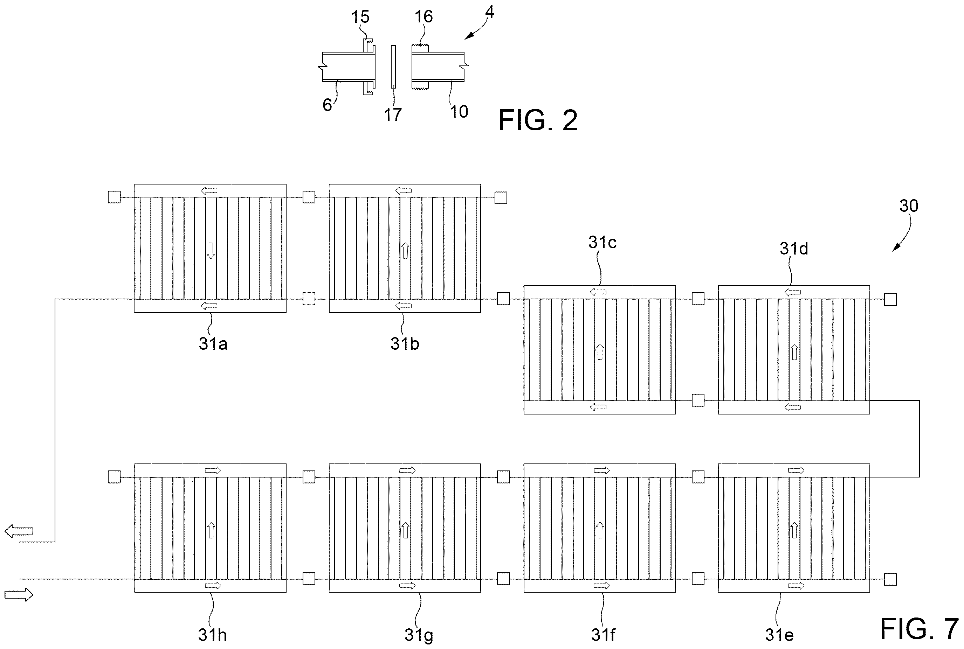

A first embodiment of the connection element 4 is shown in Figure 2.

The connection element 4 is provided with a first connection terminal 15, a second connection terminal 16, and a removable occluding element 17.

The first connection terminal 15 is coupled, in use, to the first header 6, while the second connection terminal 16 is coupled, in use, to the second header 10.

A variant provides that the first connection terminal 15 is made integral with the first header 6 and the second connection terminal 16 is made integral with the second header 10.

The first connection terminal 15 and the second connection terminal 16 can be coupled together.

The occluding element 17 is arranged between the first connection terminal 15 and the second connection terminal 16.

In particular, the first connection terminal 15 and the second connection terminal 16 are coupled together by means of a threaded male/female coupling.

The occluding element 17 is substantially aligned so as to be secured between the first connection terminal 15 and the second connection terminal 16 when the first connection terminal 15 and the second connection terminal 16 are coupled together.

The occluding element 17 thus completely blocks off passage of fluid through the connection element 4.

The occluding element 17 is preferably defined by a disk made of a material having a thickness such as to ensure a seal.

In other words, the occluding element 17 is a disk having a diameter greater than the diameter of the conduit defined by the first connection terminal 15 and the second connection terminal 16 and smaller than the outside diameter of the first connection terminal 15 and the second connection terminal 16.

The term removable means that the occluding element 17 can be easily removed to allow passage of fluid through the connection element 4.

In the non-limiting example described and illustrated herein the occluding element 17 can be removed after uncoupling the first connection terminal 15 and the second connection terminal 16.

A variant provides that removal of the disk can occur without uncoupling the first connection terminal 15 from the second connection terminal 16.

In the solar panel assembly 1 shown in Figure 1, the connection element 4 which connects the first header 6 with the second header 10 lacks the occluding element 17 and the flow of fluid through the connection element 4 is free. The two end caps 5b are arranged at one of the first headers 6 and one of the second headers 10 so as to define a predefined fluid path which is indicated with the arrows in Figure 1. In particular, the two end caps 5b are arranged in such a way that the fluid inlet into the assembly 1 and the fluid outlet from the assembly 1 are offset and arranged respectively at the lower first header 6 and the upper second header 10.

In this configuration, the first panel 2 and the second panel 3 are connected in parallel.

In essence, the fluid arriving from the heating system and/or from the domestic hot water supply system enters the first panel 2 through a first header 6. A portion of the fluid passes through the first pipes 7 to reach the other first header 6 of the first panel 2, while a portion of the fluid passes through the connector 5a so as to flow into a second header 10 of the second panel 3 so as to supply the second pipes 11 and reach the other second header 10 of the second panel 3.

The other second header 10 and the other first header 6 are in communication thanks to the fact that the occluding element 17 of the connection element 4 has been removed.

In the solar panel assembly 1 shown in Figure 3, the connection element 4 which connects the first header 6 with the second header 10 is provided with the occluding element 17 and the flow of fluid through the connection element 4 is blocked off (the connection element 4 is shown with a dashed line so as to highlight the fact that there is no passage of fluid therein). The two end caps 5b are arranged at one of the first headers 6 and one of the second headers 10 so as to define a predefined fluid path which is indicated with the arrows in Figure 3. In particular, the two end caps 5b are arranged aligned at the lower first header 6 and the lower second header 10. The fluid inlet into the assembly 1 and the fluid outlet from the assembly 1 are thus aligned and arranged at the upper first header 6 and the upper second header 10.

In this configuration, the first panel 2 and the second panel 3 are connected in series.

In essence, the fluid arriving from the heating system and/or from the domestic hot water supply system passes through the first panel 2 and then through the second panel 3. In detail, the fluid enters the first panel 2 through a first header 6, passes through the first pipes 7, reaches the other first header 6 and reaches a second header 10 of the second panel 3 via the connector 5a, passes through the second pipes 11 and reaches the other second header 10.

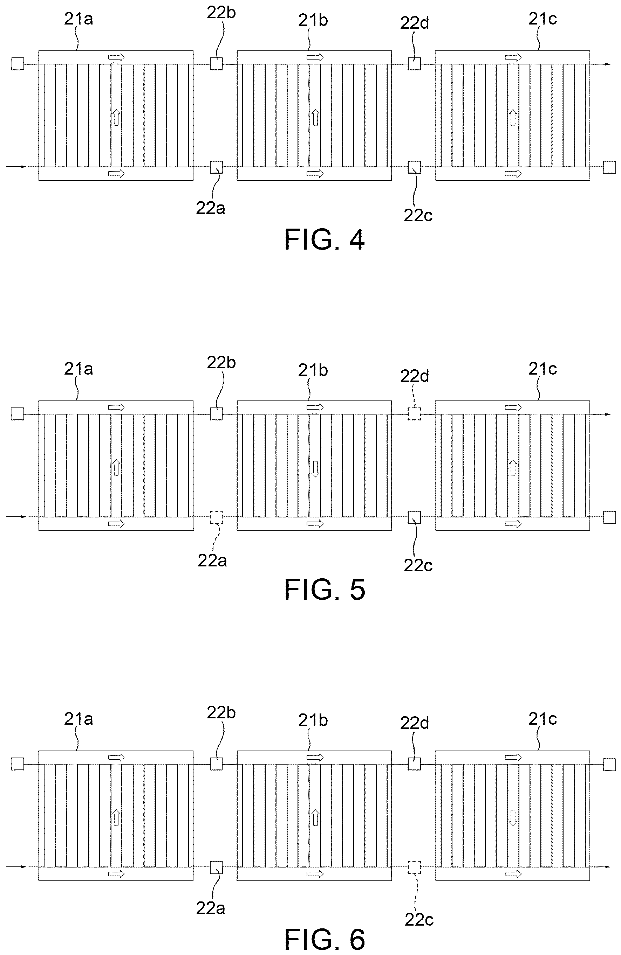

A panel assembly 20 comprising three solar panels 21a 21b 21c is shown schematically in Figure 4.

The headers of the solar panels 21a 21b 21c are connected by four connection elements 22a 22b 22c 22d substantially identical to the connection element 4 just described.

In the configuration of Figure 4, the connection elements 22a 22b 22c 22d all lack the occluding element. The solar panels 21a 21b 21c are thus all connected in parallel.

In the configuration of Figure 5, the connection elements 22b 22c lack the occluding element, while the connection element 22a and the connection element 22d are provided with the occluding element and are represented with a dotted line to highlight the fact that there is no passage of fluid therein. The solar panels 21a 21b 21c are thus all connected in series.

In the configuration of Figure 6, the connection elements 22a 22b 22d lack the occluding element, while the connection element 22c is provided with the occluding element and shown with a dotted line to highlight the fact that there is no passage of fluid therein. The solar panels 21a 21b are thus connected in parallel, while the solar panels 21b and 21c are connected in series.

The changeover from the configuration of Figure 3 to the configuration of Figure 4 and to the configuration of Figure 5 is quick and very easy, since it requires the simple removal of the occluding element from and/or insertion of the occluding element into the respective connection element.

A further solar panel assembly 30 comprising two solar panels 31a 31b connected in series, two solar panels 31c 31d connected in parallel, and four solar panels 31e 31f 31g 31h connected in parallel is illustrated schematically in Figure 7.

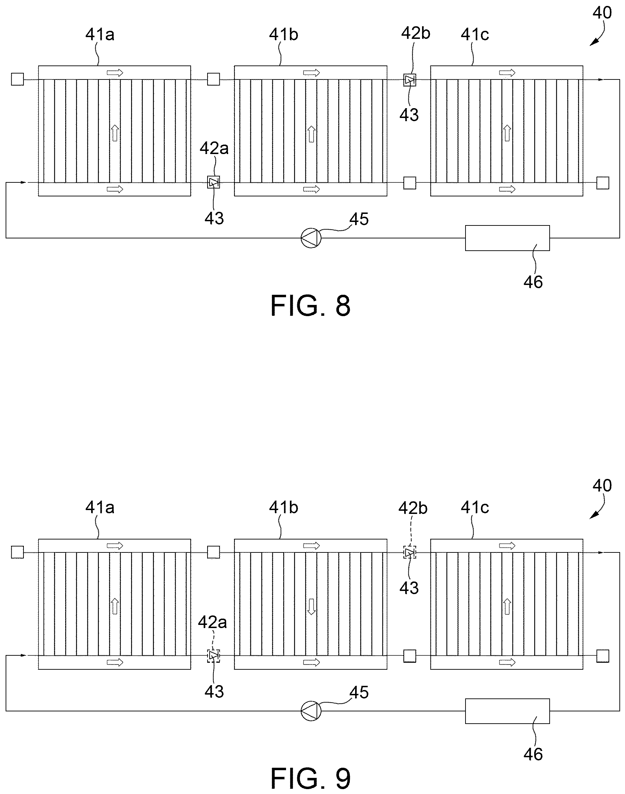

A solar panel assembly 40 in accordance with a further embodiment according to the present invention is illustrated schematically in Figure 8 and Figure 9.

The solar panel assembly 40 illustrated in Figures 8 and 9 comprises three solar panels 41a, 41b, 41c and two connection elements 42a, 42b.

Each connection element 42a, 42b comprises a valve 43 (illustrated schematically in Figure 8) provided with an occluding element movable between a closed position, wherein passage of fluid between said first header and said second header is prevented, and an open position, wherein passage of fluid between said first header and said second header is enabled.

The valve 43 is preferably a non-return valve.

The non-return valve, as known, is closed when the upstream pressure reaches values higher than a given threshold value.

In the configuration of Figure 8 the valves 43 of the connection elements 42a 42b are both open and the solar panels 41a, 41b, 41c are connected in parallel.

In the configuration of Figure 9, the valves 43 of the connection elements 42a 42b are both closed and the solar panels 41a, 41b, 41c are connected in series.

The changeover from the parallel configuration to the serial configuration can be effected easily by changing the pressure upstream of the valves 43 by controlling a pump 45 of the system, shown schematically in Figures 8 and 9 and arranged downstream of a user 46. The pump 45 is preferably controlled by a control device (not shown in the attached figures).

The control device is preferably configured so as to adjust the pump 45 based on the temperature measured at the outlet from the panel assembly.

A variant which is not shown in the attached figures provides that the valve 43 is a solenoid valve. Adjustment of the position of the solenoid valve can thus also be performed by means of signals sent by a control system. This solution is more flexible than the solution of Figures 6 and 7 because each solenoid valve can be controlled independently to obtain mixed serial/parallel configurations.

A further variant not illustrated provides that the panel assembly 40 comprises a number of connection elements 42 greater than that indicated in the preceding examples, in order to further increase the flexibility of connecting the solar panels together.

If all the panels 41 are connected together by connection elements 42, it is indeed possible to make all types of connection.

Finally, a further variant which is not shown in the attached figures provides that the panel assembly further comprises a terminal element connected to the outlets of the headers of the solar panel placed in the end position of the panel assembly. The terminal element connects the outputs of the headers to the return line of the solar heating system and is provided with a three-way valve.

Adjusting the three-way valve thus makes it possible to define the position of the fluid outflow of from the panel assembly according to needs.

The terminal element is very useful in panel assemblies comprising an even number of panels.

Thanks to the terminal element, the outlet can indeed be arranged at the upper header or at the lower header of the end panel of the panel assembly depending on the selected configuration.

This makes it possible to change the connection layout for the solar panel assembly without intervening on the connections with the supply lines and/or the return lines of the solar heating system.

A further variant provides that the panel assembly comprises a terminal element as previously described and connected to the inlets of the headers of the solar panel placed in the first position in the panel assembly. It is thus possible to modify the connection layout for the solar panel assembly without intervening on the connections with the supply lines and/or return lines of the solar heating system.

Thanks to the structure of the solar panel assembly according to the present invention, the installer can beneficially define the connection type between the solar panels quickly according to the requirements of the context and has the option of quickly and easily changing the series/parallel connection type. The installer may also be provided with a solar panel assembly installation kit (for simplicity, not shown in the attached figures) comprising, in addition to a plurality of solar panels, a plurality of connection elements according to one of the embodiments just described, each of which is configured to connect the headers of respective solar panels and to control the flow of fluid between said headers.

The installation is thus simplified and can, at the same time, be adapted to the requirements of the context.

Finally, it is evident that the solar panel assembly, the solar panel assembly installation kit, and the method described herein may be subject to modifications and variations without departing from the scope of the appended claims.

## Claims

1. A solar panel assembly comprising:
- a first solar panel (2, 3; 21a, 21b, 21c; 31a, 31b, 31c, 31d, 31e, 31f, 31g; 41a, 41b, 41c) comprising two first headers (6) and a plurality of first pipes (7) arranged parallel and connected, at their ends, to the first headers (6);
- at least one second solar panel (3, 2; 21b, 21c, 21a; 31b, 31c, 31d, 31e, 31f, 31g, 31a; 41b, 41c, 41a) comprising two second headers (10) and a plurality of second pipes (11) arranged parallel and connected, at their ends, to the second headers (10); and
- at least one connection element (4; 22a, 22b, 22c, 22d; 42a, 42b) configured for connecting a first header (6) and a second header (10) and for regulating passage of the fluid between said first header (6) and said second header (10).

2. The assembly according to claim 1, wherein the connection element (4; 22a, 22b, 22c, 22d; 42a, 42b) comprises a removable occluding element (17).

3. The assembly according to claim 1, wherein the occluding element (17) is configured so as to prevent passage of fluid between said first header (6) and said second header (10).

4. The assembly according to claim 2, wherein the connection element (4) comprises a first connection terminal (15) coupled to the first header (6) and a second connection terminal (16) coupled to the second header (10); the first connection terminal (15) and the second connection terminal (16) being couplable together, and the occluding element (17) being arranged between the first connection terminal (15) and the second connection terminal (16).

5. The assembly according to claim 1, wherein the connection element (42a, 42b) comprises a valve (43) provided with an occluding element movable between a closed position wherein passage of fluid between said first header (6) and said second header (10) is prevented and an open position wherein passage of fluid between said first header (6) and said second header (10) is enabled.

6. The assembly according to claim 5, wherein the valve is a non-return valve.

7. The assembly according to claim 5, wherein the valve is a solenoid valve.

8. The assembly according to any of claims 5 to 7, comprising a control device configured to directly or indirectly regulate the position of the valve (43).

9. The assembly according to any one of the preceding claims, wherein the first solar panel (2, 3; 21a, 21b, 21c; 31a, 31b, 31c, 31d, 31e, 31f, 31g; 41a, 41b, 41c) and the second solar panel (3, 2; 21b, 21c, 21a; 31b, 31c, 31d, 31e, 31f, 31g, 31a; 41b, 41c, 41a) differ in at least one dimension of length or width; the distance (D1) between the first headers (6) being identical to the distance (D2) between the second headers (10).

10. A method for modifying the connection mode between at least one first solar panel (2, 3; 21a, 21b, 21c; 31a, 31b, 31c, 31d, 31e, 31f, 31g; 41a, 41b, 41c) and one second solar panel (3, 2; 21b, 21c, 21a; 31b, 31c, 31d, 31e, 31f, 31g, 31a; 41b, 41c, 41a), which are connected together either in series mode or parallel mode; the first solar panel (2, 3; 21a, 21b, 21c; 31a, 31b, 31c, 31d, 31e, 31f, 31g; 41a, 41b, 41c) being provided with first headers (6) connected to respective second headers (10) of the second solar panel (3, 2; 21b, 21c, 21a; 31b, 31c, 31d, 31e, 31f, 31g, 31a; 41b, 41c, 41a);
the method comprising the steps of:
- connecting at least one first header (6) and at least one second header (10) by means of a connection element (4; 22a, 22b, 22c, 22d; 42a, 42b) configured to regulate passage of the fluid between said first header (6) and said second header (10);
- either selectively occluding passage of fluid between the first header (6) and the second header (10) so as to modify the connection mode between the first solar panel (2, 3; 21a, 21b, 21c; 31a, 31b, 31c, 31d, 31e, 31f, 31g; 41a, 41b, 41c) and the second solar panel (3, 2; 21b, 21c, 21a; 31b, 31c, 31d, 31e, 31f, 31g, 31a; 41b, 41c, 41a); or
- selectively enabling passage of fluid between the first header (6) and the second header (10) so as to modify the connection mode between the first solar panel (2, 3; 21a, 21b, 21c; 31a, 31b, 31c, 31d, 31e, 31f, 31g; 41a, 41b, 41c) and the second solar panel (3, 2; 21b, 21c, 21a; 31b, 31c, 31d, 31e, 31f, 31g, 31a; 41b, 41c, 41a).

11. The method according to claim 10, wherein the step of selectively occluding passage of fluid comprises inserting a removable occluding element (17) in the connection element (4) so as to prevent passage of fluid, whereas the step of selectively enabling passage of fluid comprises removing the occluding element (17).

12. The method according to claim 10, wherein the connection element (42a, 42b) comprises a valve (43) provided with an occluding element movable between a closed position, wherein passage of fluid between said first header (6) and said second header (10) is prevented, and an open position, wherein passage of fluid between said first header (6) and said second header (10) is enabled.

13. The method according to claim 12, wherein the valve (43) is a non-return valve; the step of selectively occluding passage of fluid comprising regulating the pressure of the fluid in the first header (6) in such a way that the occluding element of the non-return valve is in the closed position, while the step of selectively enabling passage of fluid comprises regulating the pressure of the fluid in the first header (6) in such a way that the occluding element of the non-return valve is in the open position.

14. The method according to claim 12, wherein the valve (43) is a solenoid valve; the step of selectively occluding passage of fluid comprising controlling the solenoid valve in such a way that the occluding element of the solenoid valve is in the closed position, while the step of selectively enabling passage of fluid comprises controlling the solenoid valve in such a way that the occluding element of the solenoid valve is in the open position.

15. A kit for installing solar panel assemblies, comprising:
- a plurality of solar panels (2, 3; 21a, 21b, 21c; 31a, 31b, 31c, 31d, 31e, 31f, 31g; 41a, 41b, 41c);
- a plurality of connection elements (4; 22a, 22b, 22c, 22d; 42a, 42b), each of which is configured for connecting headers (6; 10) of respective solar panels (2, 3; 21a, 21b, 21c; 31a, 31b, 31c, 31d, 31e, 31f, 31g; 41a, 41b, 41c) and for regulating passage of fluid between said headers (6; 10).

16. The kit according to claim 15, wherein the connection element (4; 22a, 22b, 22c, 22d; 42a, 42b) comprises a removable occluding element (17).

17. The kit according to claim 15, wherein the connection element (42a, 42b) comprises a valve (43) provided with an occluding element movable between a closed position, wherein passage of fluid between said headers (6; 10) is prevented, and an open position, wherein passage of fluid between said headers (6; 10) is enabled.

18. The kit according to claim 17, wherein the valve (43) is a non-return valve.

19. The kit according to claim 17, wherein the valve (43) is a solenoid valve.
